# EUROPEAN PATENT SPECIFICATION

(11) **EP 2 466 790 B1**
(45) Date of publication and mention of the grant of the patent: **15.11.2017**
(21) Application number: 10290658.3
(22) Date of filing: 15.12.2010
(51) Int. Cl.: H04L 12/801, H04M 15/00, H04L 12/14, H04L 12/26, H04W 4/24

(54) **Network managing system**
Netzwerkverwaltungssystem
Système de gestion de réseau

(43) Date of publication of application: 20.06.2012
(73) Proprietor: ALCATEL LUCENT, 92100 Boulogne-Billancourt (FR)
(72) Inventor: Saker, Daniel, 91620 Nozay (FR)
(74) Representative: Berthier, Karine

(56) References cited:
- WO-A2-2005/017707
- "3rd Generation Partnership Project; Technical Specification Group Core Network and Terminals; Policy and Charging Control over Rx reference point (Release 9)", 3GPP STANDARD; 3GPP TS 29.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 18 December 2009 (2009-12-18), pages 1-44, XP050401212, [retrieved on 2009-12-18]

## Description

### BACKGROUND OF THE INVENTION

The present invention relates to the field of telecommunications and more specifically of radio resources allocation between a network cell antenna and a user equipment.

With the spreading of advanced 3G, WiMAX and 4G network equipments, the user sessions are more and more without interruption while lasting for hours. The density of the network load at the level of a cell accordingly becomes higher.

As a consequence, the quality of service in densely used network cells declines as less network resources are available for each user.

While, at network cell level, offered quality of service depends on time and localisation of said cell, the tariffing of the network use depends on globally established rules. With the mobility of the users, the resources allocation rules have to be established during the session and to be refreshed regularly.

The existing network managing systems include a Policy and Charging Rules Function (PCRF), connected to an Online Charging System (OCS). The online charging system manages the rating and charging of the user session according to the tariff plan the user has subscribed to, and the policy and charging rule function determines the resource allocation rules and allocates the resources accordingly.

Document WO 2005/017707 mentions the use of consumer data to dynamically attribute network area resources.

Document 3GPP TS 29.214 V9.2.0 entitled "3rd Generation Partnership Project; Technical Specification Group Core Network and Terminals; Policy and Charging Control over Rx reference point" mentions the use and properties of a standard 3GPP policy and charging rules function to attribute network area resources.

A Policy and Charging Enforcement Function (PCEF), connected to the policy and charging rules function has the ability to process, filter and control the user session and traffic in order to apply the policy rules. Said policy and charging enforcement function also generates charging requests directed to the online charging system whenever a charged session event occurs.

However, these network managing systems do not take into account the local network load.

### SUMMARY OF THE INVENTION

It is therefore an object of the present invention to provide a network managing system allowing to dynamically charge the users and manage the network resources allocation of a network according to the local network load.

Therefore, the invention has for object a wireless network managing system, as described in claims 1-14. The network managing system can also have one of the following characteristics, taken separately or in combination.

It further comprises a zoning management system coupled to at least one operation and maintenance center of the at least one network cell and configured to collect network performance data and use said network performance data to establish a zone load indicator.

The network performance data comprises a count of the active sessions per cell in the considered network area.

The zoning management system is configured to collect the network performance data to calculate the zone load indicator periodically.

The zoning management system is configured to collect the network performance data when receiving a zone load indicator value interrogation.

The operation and maintenance center is configured to push the network performance data to the zoning management system when predetermined network performance data fluctuation thresholds are reached.

The online charging system is configured to notify the policy and charging rules function to determine new policy rules when predetermined zone load indicator fluctuation thresholds are reached.

The policy and charging rules function is configured to interrogate the online charging system to retrieve the zone load indicator during a session at the triggering of at least one session event bound armed trigger.

The online charging system is configured to determine from a network triggering message a subscriber location information to interrogate the zoning management system corresponding to the cell where the triggering message is detected.

Specific rating parameters are defined and used to establish the policy rules for a wireless radio access network area.

Another object of the invention is the wireless network radio access resources managing method in a network managing system comprising :
▪ an online charging system of at least one wireless radio access network arca covering at least one network cell,
▪ a policy and charging rules function configured to interrogate a zone load indicator value representative of the network load in the at least one network cell,
with the following step :
- network performance data of the at least one operation and maintenance center connected to the at least one network cell is collected,
- network resources allocation and user rating and charging policy rules arc established by the policy and charging rules function taking into account the network performance data value compared to thresholds and the user profile and credit stored on the online charging system (13).

The method can also have one of the following characteristics, taken separately or in combination.

It further comprises the steps :
- a zoning management collects the network performance data from the at least one operation and maintenance center connected to the at least one network cell,
- the zoning management uses the collected data to establish a zone load indicator of the zone covering the at least one network cell,
- the policy and charging rules function generates rules taking into account the zone load indicator value.

The policy rules arc established further taking into account at least one of the following criteria :
- the network load in the zone corresponding to the destination of the call, session or service requested by the user,
- the user is the last connected in considered network cell,
- the user currently has an open session but at least one notification about reached consumption thresholds have been received,
- the user subscribed to a given service offer,
- the user belongs to a given rating group,
- the user uses a service with given required media type or bearer,
- the user is paying a different price,
- the user requires a specific service.

The policy rules are applied by a policy and charging enforcement function using at least one of the following actions :
- to determine and/or modify charging rule or group,
- to modify the bandwidth available to one user,
- to modify the quality of service,
- to terminate the session,
- to redirect user to another service,
- to restrict specific accesses,
- to filter the session traffic by applying an IP packet filter in order to block at least one specific media type,
- to redirect the user session to another network,
- to modify session priorities,
- to modify session policies.

Further characteristics of the invention will appear at the reading of the following description, describing by way of example different embodiments with reference to the accompanying drawings, in which :
- Fig. 1 represents a schematic view of different elements of one embodiment of a network comprising a network managing system according to the invention,
- Fig. 2 represents a schematic view of different elements of an alternative embodiment derived from the embodiment of Figure 1,
- Fig. 3 represents a schematic view of different elements of a second alternative embodiment, also derived from the embodiment of Figure 1,
- Fig. 4 shows the different communications between elements of network managing system of Fig. 1 at the establishment of a connection.

In all figures the same references relate to the same elements.

### DETAILED DESCRIPTION OF THE INVENTION

The invention relates to a network management system. More particularly, the invention relates to a radio resources allocation system in a wireless network comprising a plurality of cells, some of them being adjacent to each other to cover at least one area.

The wireless networks using the GPRS (General Packet Radio Service) and EDGE (Enhanced Data rates for GSM Evolution) of the second mobile communication generation (2G) rely on packet exchange using radio waves with frequency division duplex and phase shift keying, and allow data exchange rates up to 20 kbps for GPRS and up to theoretically 384 kbps for EDGE at around 900 MHz with 200 kHz bandwidth channels.

The wireless networks of the third generation (3G) use the UMTS (Universal Mobile Telecommunication System) norm. They are based on the W-CDMA technology (Wideband Code Division Multiple Access Evaluation), using radio signals around 1900-2000 MHz, divided into 5 MHz bands. They allow around 144 kbps for a mobile use in urban areas, up to 384 kbps with reduced (pedestrian) nobility, and theoreticaly up to 2000 kbps in a building.

The transitional third generation (so called 3G+ or 3.5 to 3.9G) of the 3GPP or 3GPP2 (Thrd Generation Partnership Projects 1 and 2) rely on HSDPA (High Speed Downlink Packet Access) and HSUPA (High Speed Uplink Packet Access).

The fourth generation (4G) relies on the LTE (Long Term Evolution) derivation of transitional third generation or the emerging WiMAX (Worldwide Interoperability for Microwave Access), and are destined to allow download speeds up to 1 Gbps with reduced mobility or 100 Mbps at high user mobility. To do so, they use radio signals from 2 GHz up to 66 GHz, divided in up to 10 or 20 MHz bandwidths with orthogonal frequency division multiplexing.

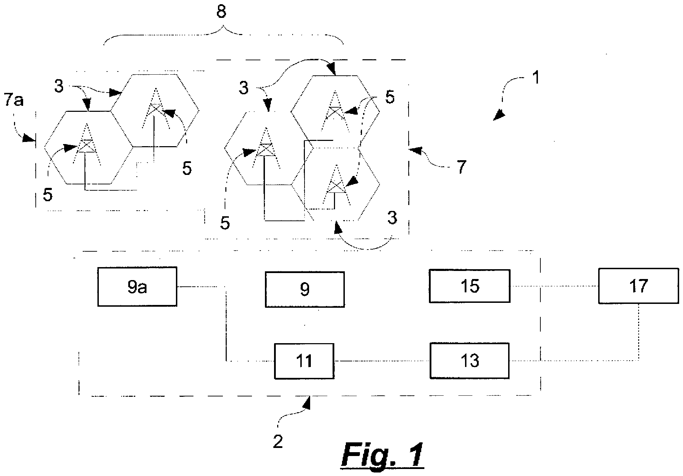

The figure 1 illustrates the architecture of such a network and system.

In figure 1, the network 1 comprises several cells 3, represented as adjacent hexagons centred each on their respective antenna 5. The adjacent cells 3 form a network area 7. A second area 7a is represented next to the first one 7. The neighbouring areas 7, 7a form a network zone 8.

Each zone 8 of the network 1 is associated to a network managing system 2.

The antennas 5 of the cells 3 of each area 7 or 7a are respectively connected to an operation and maintenance center (OMC) 9 or 9a.

The operation and maintenance centers 9, 9a of the considered network zone 8 are connected to a zoning management 11.

The zoning management 11 is configured to retrieve network performance data from the operation and maintenance centers 9, 9a via a file transfer protocol (FTP) interface, to establish a zone load indicator, indicating the current network traffic load level in the managed network zone 8.

The network performance data may, for example, comprise a count of the active sessions per cell 3. Compared to the capacity of the antenna 5 of cach cell 3, this count allows to compare the current load with a maximum capacity for a given quality of service (QoS).

The interface between the operation and maintenance center 9, 9a and the zoning management system 11 is a file transfer protocol (FTP) interface. The update of the zone load indicator, corresponding to an upload of the network performance data from the operation and maintenance center 9 to the zoning management system 11 can be done periodically. The period between two updates may be adapted to the time of the day or the date, said period being shorter in times when more fluctuations in the network load are expected or detected.

In addition or as an alternative, the update of the zone load indicator value is done on triggering of event event bound triggers, like for example reception of a zone load indicator value request.

Also, the operation and maintenance center 9, 9a is configured to forward, or push, the network performance data to the zoning management system 11, and then to trigger a pushing of the zone load indicator to the online charging system 13, when significant changes are detected, like a reduced connectivity in a network area 7, 7a, due for example to the malfunction of a server or antenna 5, or when a certain number of connections is reached. To detect said significant changes, network load data fluctuation thresholds are determined, and their crossing triggers the network load data push.

The zoning management 11 is connected to an Online Charging System (OCS) 13. The online charging system 13 manages the consumption credits of the network users, according to the tariff plan they subscribed to. For example, the relevant data can be stored in a Subscriber Profile Repository, connected to or part of the online charging system 13.

The online charging system 13 is connected to a policy and charging rules function (PCRF) 15. The policy and charging rules function 15 establishes rules regarding network resources allocation and user rating and charging in the different areas 7, 7a covered by the managed network zone 8.

The policy and charging rules function 15 is configured to establish said rules according to the consumption state of the user, as found in the online charging system 13, and the zone load indicator established by the zoning management system 11 of the zone 8, area 7 and cell 3 in which the user has a current session.

Furthermore, the policy and charging rules function 15 may also take into account the zone load indicator of the network zone 8 corresponding to the destination of the call, session or service initiated by the user. For example, the online charging system can be configured to interrogate another network managing system 2, managing the zone 8 of the destination of the call, session or service requested by the user in order to retrieve the destination zone load indicator.

The charging and/or allowing of bandwidth consuming services, like videoconferencing, can then depend on the network load measured in both origin and destination of the call, session or service.

In particular, the policy and charging rules function 15 is configured to detect specific values of the zone load indicator, for example by comparing the current value to specific threshold values.

The online charging system 13 is configured to force the policy and charging rules function 15 to determine new policy rules when predetermined zone load indicator fluctuation thresholds are reached corresponding to important changes of the load level, or when the user changes the network cell 3.

To determine the rules to apply, or the values of the thresholds the policy and charging rules function 15 also takes into account user specific ruling parameters such as :
- the user is the last connected in considered network cell 3,
- the user currently has an open session but at least one notification about reached consumption thresholds have been sent and received,
- the user subscribed to a given service offer,
- the user has a specific account profile,
- the user uses a service with given required media type or bearer,
- the user is paying a different price,
- the user requires a specific service requiring special amounts of bandwidth.

Moreover, for promotion or to avoid overload, network zone 8 or network area 7 or 7a specific ruling parameters are temporarily set, corresponding to discounts or surcharges, which are also taken into account by the policy and charging rules function 15 and/or the online charging system 13, potentially only for redefined time bands.

In particular, some network cells 3 can be defined as "home" cells, attached to the user, and in which special lower tariffs can be applied.

When specific values are detected, or thresholds are crossed, the policy and charging rules function 15 is configured to send a request to a policy and Charging Enforcement Function (PCEF) 17. The policy and charging enforcement function 17 may comprise for example a dedicated program or algorithmic logic unit in a gateway, such as a gateway GPRS support node (GGSN), a LTE packet gateway (LTE P-GW), packet data service node (PDSN) or directly in the user equipment.

The request may be one of the following :
- to determines and/or modify charging rule or group,
- to modify the bandwidth available to one user,
- to modify the quality of service,
- to terminate and close the session,
- to redirect user to another service,
- to restrict specific accesses,
- to filter the session traffic by applying the Packet IP filter in order to block at least one specific media type,
- to modify session priorities,
- to modify session policies.

For example, in order to avoid traffic congestion, when the zone load indicator indicates a high load in the area, the policy and charging enforcement function 17 may be requested by the policy and charging rules function 15 to apply an IP filter, selectively blocking packets corresponding to high density media, such as video streaming packets. The blocking may be applied for all connections, or, alternatively, for the newly or last requested sessions. Thus, video conferencing, for example, can be continued but only with voice communication.

Another possible request is the redirection or rerouting of an incoming session towards an alternative network. If the network managing system 2 is connected to a plurality of networks 1, the managing system 2 can choose to redirect incoming sessions or session requests to a network with a lower load. For example, Mobile Virtual Network Operators (MVNO), are operators who contract with several network providers to dynamically attribute users to the less overloaded network according to the period or area, and arc likely to use such a functionality.

The policy and charging rules function 15 retrieves the zone load indicator at regular time intervals and/or when specific session events occur, like a session start or termination. Said events are associated to trigger functions that cause the policy and charging rules function 15 to send a request to the operation and maintenance center 9, 9a.

In addition, the policy and charging rules function 15 can communicate with the zoning management system 11 of the zone of the destination of a call or service, or any other system, to retrieve the corresponding zone load indicator, and to determine policy rules further taking into account the load level at call or service destination.

The online charging system 13 is configured to use network triggering messages, such as session initiation requests to determine the user localisation in the network 1. With the user localisation determined, the online charging system 13 interrogates the corresponding zoning management 11 to retrieve the zone load indicator. Such network triggering messages are usually emitted by the the policy and charging enforcement function 17, but other user network equipments, such as a gateway (GGSN, LTE P-GW, PDSN), emit messages that can serve as triggering message.

To determine the thresholds used to determine the rules, the policy and charging rules function 15, uses historic network performance data.

Also, historic network performance data are used to force the used set of rules according to forecasts. For example, the recursive presence of network overload at specific time bands (such as rush hours) can be used to set in advance the rules to correspond to high user traffic, to prevent network congestion and/or steeply downgrading the quality of service for users during active sessions.

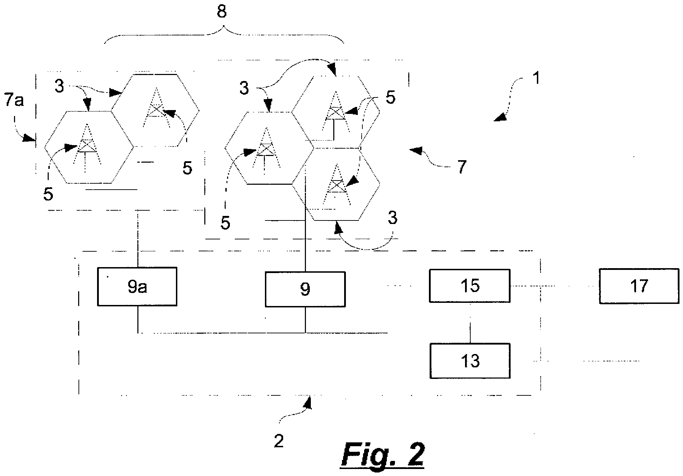

In Figure 2, the network architecture is globally the same, but no zoning management 11 is present. In this alternative architecture, the policy and charging rules function 15 is directly connected to the operation and maintenance centers 9, 9a of the zone 8. The policy and charging rules function 15 collects directly the network load data and uses said network load data to determine the rules to apply.

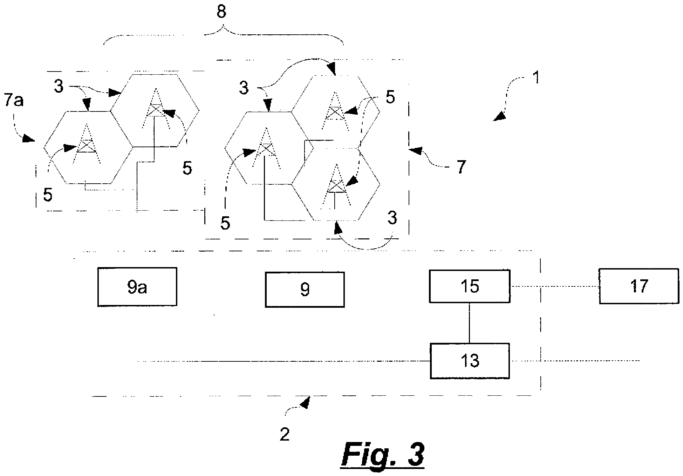

In Figure 3, a second alternative architecture is represented, derived from the architecture of Figure 2. In Figure 3, the online charging system 13 is directly connected to the operation and maintenance centers 9, 9a of the zone 8. In this architecture, the online charging system 13 collects the network load data and submits it to the policy and charging rules function 15, eventually under the form of a zone load indicator.

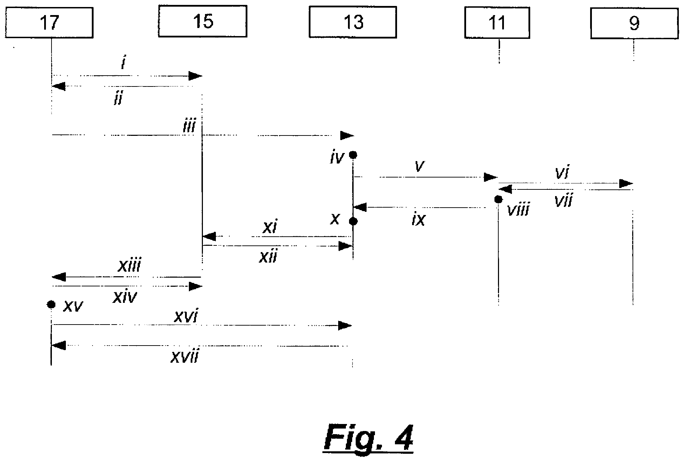

Figure 4 illustrates the communication between the different components of the network of figure 1, during the establishing of a session in an overloaded zone.

The different elements are represented by vertical lines, the requests and answers or notifications from one element to another are represented by horizontal arrows, departing from the emitter and pointing to the receiver.

Figure 4 is a diagram illustrating the different interactions between the aforementioned network elements during the establishing of a session in a previously overloaded area 7. Figure 4 pictures an example of the network management method associated to the network management system described in figure 1.

The different elements are represented by vertical lines, and the different communications between them are represented by horizontal arrows, departing from the emitter and pointing at the receiver.

The communications are represented chronologically from top to bottom along the vertical direction.

The first step is the emission from the policy and charging enforcement function 17 of a session initiation request in i towards the policy and charging rules function 15, via a *Gx* interface. This request comprises an identification of the user. The policy and charging rules function 15 responds with a session initiation answer in *ii* via the *Gx* interface, containing an identification of the current rating group identification and an identification of the rule set the user is submitted to.

In a third step, the policy and charging enforcement function 17 sends a session initiation request in *iii* to the online charging system 13, containing the received identification of the current rating group identification and identification of the rule set the user is submitted to, via a *Gy* interface. This request in *iii* acts as a triggering message, and in iv the online charging system 13 determines from the network triggering message a subscriber location information.

Then the online charging system 13 sends an interrogation in *v* to the zoning management system 11 via a HTTP, possibly HTTPS, or XML interface of the established location. Upon reception of the interrogation, the zoning management system 11 sends a zone load level update request in *vi* to the operation and maintenance center 9 corresponding to the location of the user. The operation and maintenance center 9 responds with a zone load level update answer in *vii* comprising the network performance data. In *viii* the zoning management system 11 uses the updated network performance data to determine zone load indicator.

The zoning management system 11 sends a zone load indicator value push *ix* to the online charging system 13. In x, the online charging system 13 compares the zone load indicator value to the preset thresholds, and consequently sends a notification in *xi* to the policy and charging rules function 15 via an algorithmic logic unit (ΛLU) interface, to which the policy and charging rules function 15 answers with a notification confirmation in *xii.* The interface between online charging system 13 and policy and charging rules function 15 can be Diameter based or SOAP based.

The policy and charging rules function 15 then sends rules transmission in *xiii* to the policy and charging enforcement function 17 comprising the rules to apply, regarding quality of service and corresponding to the zone load indicator value and its comparison to the thresholds established in *x.* In this particular example the rules correspond to a "overloaded network arca" situation. The policy and charging enforcement function answers with a rules transmission confirmation in *xiv* comprising the network resources allocation rules.

According to the rules, the policy and charging enforcement function then sets up bandwidth limitations, IP packets filters or terminates services in *xv* to adapt the quality of service, and starts sending in *xvi* charging information to the online charging system 15.

In response to said charging information, the online charging system 15 eventually sends a request in *xvii* to modify quality of service if thresholds in the user's account are crossed or reached.

The network managing system 2 and the associated network managing method allow to dynamically control the charging of a user according to the local network load. This allows a charging adapted to mobile devices using advanced 3G or 4G technology, and to the enhanced mobility they allow.

## Claims

1. A wireless network managing system (2), comprising :
▪ an online charging system (13) of at least one wireless radio access network area (7, 7a) covering at least one network cell (3),
▪ a policy and charging rules function (15) configured to interrogate a zone load indicator value representative of the network load in the at least one network cell (3),
wherein the policy and charging rules function (15) is configured to determine threshold values of the zone load indicator according to historical radio access network performance data, and wherein the policy and charging rules function (15) is configured to establish network resources allocation, and user rating and charging policy rules based on detection of values of the zone load indicator compared to thresholds and the user profile and credit stored on the online charging system (13).

2. A system according to claim 1, wherein the policy and charging rules function (15) is configured to establish resources allocation and user rating and charging policy rules further taking into account the zone load indicator of the network area (7, 7a) corresponding to the destination of a call or service requested by the user.

3. A system according to claim 1 or 2, wherein it further comprises a zoning management system (11) coupled to at least one operation and maintenance center (9, 9a) of the at least one network cell (3) and configured to collect network performance data and use said network performance data to establish a zone load indicator.

4. A system according to claim 2 or 3, wherein the network performance data comprises a count of the active sessions per cell (3) in the considered network area (7, 7a).

5. A system according to claim 3 or 4, wherein the zoning management system (11) is configured to collect the network performance data to calculate the zone load indicator periodically.

6. A system according to any of claims 3 or 4, wherein the zoning management (11) system is configured to collect the network performance data when receiving a zone load indicator value interrogation.

7. A system according to any of claims 1 to 6, wherein the online charging system (13) is configured to notify the policy and charging rules function (15) to determine new policy rules when predetermined zone load indicator fluctuation thresholds are reached.

8. A system according to any of claims 1 to 7, wherein the policy and charging rules function (15) is configured to interrogate the online charging system (9, 9a) to retrieve the zone load indicator during a session at the triggering of at least one session event bound armed trigger.

9. A system according to any of claims 1 to 8, wherein the online charging system (13) is configured to determine from a network triggering message a subscriber location information to interrogate the network management system (2) corresponding to the cell (3) where the triggering message is detected.

10. A system according to any of claims 1 to 9, wherein specific rating parameters are defined and used to establish the policy rules for a wireless radio access network area (7, 7a).

11. Wireless network radio access resources managing method in a network (1) managing system (2), comprising :
▪ an online charging system (13) of at least one wireless radio access network area (7, 7a) covering at least one network cell (3),
▪ a policy and charging rules function (15) configured to interrogate a zone load indicator value representative of the network load in the at least one network cell (3),
comprising the following steps :
- network performance data of at least one operation and maintenance center (9, 9a) connected to the at least one network cell (3) is collected,
- the policy and charging rules function (15) determines threshold values of the zone load indicator according to historical radio access network performance data,
- network resources allocation and user rating and charging policy rules are established by the policy and charging rules function (15) taking into account the zone load indicator value compared to thresholds and the user profile and credit stored on the online charging system (13).

12. The method of claim 11, further comprising the steps :
- a zoning management collects the network performance data from the at least one operation and maintenance center (9, 9a) connected to the at least one network cell (3),
- the zoning management uses the collected data to establish a zone load indicator of the zone (8) covering the at least one network cell (3),
- the policy and charging rules function (15) generates rules taking into account the zone load indicator value.

13. The method of claim 11 or 12, wherein the policy rules are established further taking into account at least one of the following criteria :
- the network load in the zone corresponding to the destination of the call, session or service requested by the user,
- the user is the last connected in considered network cell (3),
- the user currently has an open session but at least one notification about reached consumption thresholds have been received,
- the user subscribed to a given service offer,
- the user belongs to a given rating group,
- the user uses a service with given required media type or bearer,
- the user is paying a different price,
- the user requires a specific service.

14. The method of any of the claims 11 to 13, comprising a step in which the policy rules are applied by a policy and charging enforcement function (PCEF) (17) using at least one of the following actions :
- to determine and/or modify charging rule or group,
- to modify the bandwidth available to one user,
- to modify the quality of service,
- to terminate the session,
- to redirect user to another service,
- to restrict specific accesses,
- to filter the session traffic by applying an IP packet filter in order to block at least one specific media type,
- to redirect the user session to another network,
- to modify session priorities,
- to modify session policies.

## Patentansprüche

1. Verwaltungssystem (2) für ein drahtloses Netzwerk, umfassend:
▪ ein Online-Gebührensystem (13) mindestens eines drahtlosen Funkzugangsnetzwerkbereichs (7, 7a), der mindestens eine Netzwerkzelle (3) abdeckt,
▪ eine Richtlinien- und Gebührenregelfunktion (15), die ausgelegt ist, um einen Zonenlastindikatorwert abzufragen, der für die Netzwerklast in der mindestens einen Netzwerkzelle (3) bezeichnend ist,
wobei die Richtlinien- und Gebührenregelfunktion (15) ausgelegt ist, um Grenzwerte des Zonenlastindikators gemäß einem Leistungsdatenverlauf des Funkzugangsnetzwerks zu bestimmen, und wobei die Richtlinien- und Gebührenregelfunktion (15) ausgelegt ist, um Regeln für die Netzwerkressourcenzuweisung und die Benutzerbewertung und Gebührenrichtlinie basierend auf der Erkennung von Werten des Zonenlastindikators verglichen mit Grenzwerten und dem Benutzerprofil und Guthaben, das im Online-Gebührensystem (13) gespeichert ist, aufzustellen.

2. System nach Anspruch 1, wobei die Richtlinien- und Gebührenregelfunktion (15) ausgelegt ist, um Regeln für die Ressourcenzuweisung und die Benutzerbewertung und Gebührenrichtlinie aufzustellen, wobei weiterhin der Zonenlastindikator des Netzwerkbereichs (7, 7a) entsprechend dem von dem Benutzer angeforderten Ziel eines Anrufs oder Dienst berücksichtigt wird.

3. System nach Anspruch 1 oder 2, wobei es weiterhin ein Zonenverwaltungssystem (11) umfasst, das an mindestens ein Betriebs- und Wartungszentrum (9, 9a) der mindestens einen Netzwerkzelle (3) gekoppelt und ausgelegt ist, um Netzwerkleistungsdaten zu erfassen und die besagten Netzwerkleistungsdaten zu verwenden, um einen Zonenlastindikator zu erstellen.

4. System nach Anspruch 2 oder 3, wobei die Netzwerkleistungsdaten eine Zählung der aktiven Sitzungen pro Zelle (3) in dem berücksichtigten Netzwerkbereich (7, 7a) umfassen.

5. System nach Anspruch 3 oder 4, wobei das Zonenverwaltungssystem (11) ausgelegt ist, um die Netzwerkleistungsdaten zum periodischen Berechnen des Zonenlastindikators zu erfassen.

6. System nach einem beliebigen der Ansprüche 3 oder 4, wobei das Zonenverwaltungssystem (11) ausgelegt ist, um die Netzwerkleistungsdaten zu erfassen, wenn eine Abfrage des Zonenlastindikatorwerts empfangen wird.

7. System nach einem beliebigen der Ansprüche 1 bis 6, wobei das Online-Gebührensystem (13) ausgelegt ist, um der Richtlinien- und Gebührenregelfunktion (15) zu melden, neue Richtlinienregeln zu bestimmen, wenn vorausbestimmte Zonenlastindikator-Schwankungsgrenzen erreicht werden.

8. System nach einem beliebigen der Ansprüche 1 bis 7, wobei die Richtlinien- und Gebührenregelfunktion (15) ausgelegt ist, um das Online-Gebührensystem (9, 9a) zum Abrufen des Zonenlastindikators während einer Sitzung beim Auslösen mindestens eines an ein Sitzungsereignis gebundenen, aktivierten Auslösers abzufragen.

9. System nach einem beliebigen der Ansprüche 1 bis 8, wobei das Online-Gebührensystem (13) ausgelegt ist, um aus einer Netzwerkauslösenachricht eine Teilnehmerstandortsinformation zu bestimmen, um das Netzwerkverwaltungssystem (2) abzufragen, das der Zelle (3) entspricht, wo die Auslösenachricht erkannt wird.

10. System nach einem beliebigen der Ansprüche 1 bis 9, wobei spezifische Bewertungsparameter definiert und verwendet werden, um die Richtlinienregeln für einen drahtlosen Funkzugangsnetzwerkbereich (7, 7a) aufzustellen.

11. Verfahren zum Verwalten von Funkzugangsressourcen in einem drahtlosen Netzwerk in einem Netzwerkverwaltungssystem (2), umfassend:
▪ ein Online-Gebührensystem (13) mindestens eines drahtlosen Funkzugangsnetzwerkbereichs (7, 7a), der mindestens eine Netzwerkzelle (3) abdeckt,
▪ eine Richtlinien- und Gebührenregelfunktion (15), die ausgelegt ist, um einen Zonenlastindikatorwert abzufragen, der für die Netzwerklast in der mindestens einen Netzwerkzelle (3) bezeichnend ist,
mit den folgenden Schritten:
- Erfassen von Netzwerkleistungsdaten von mindestens einem Betriebs- und Wartungszentrum (9, 9a), das mit der mindestens einen Netzwerkzelle (3) verbunden ist,
- Bestimmen von Grenzwerten des Zonenlastindikators gemäß einem Leistungsdatenverlauf des Funkzugangsnetzwerks durch die Richtlinien- und Gebührenregelfunktion (15)
- Aufstellen von Regeln für die Netzwerkressourcenzuweisung und Benutzerbewertung und Gebührenrichtlinie durch die Richtlinien- und Gebührenregelfunktion (15), wobei der Wert des Zonenlastindikators verglichen mit Grenzwerten und dem Benutzerprofil und Guthaben, das im Online-Gebührensystem (13) gespeichert ist, berücksichtigt wird.

12. Verfahren nach Anspruch 11, weiterhin mit folgenden Schritten:
- Erfassen der Netzwerkleistungsdaten von dem mindestens einem Betriebs- und Wartungszentrum (9, 9a), das mit der mindestens einen Netzwerkzelle (3) verbunden ist, durch eine Zonenverwaltung,
- Verwenden der erfassten Daten zum Erstellen eines Zonenlastindikators der Zone (8), welche die mindestens eine Netzwerkzelle (3) abdeckt, durch die Zonenverwaltung,
- Erzeugen von Regeln, die den Zonenlastindikatorwert berücksichtigen, durch die Richtlinien- und Gebührenregelfunktion (15).

13. Verfahren nach Anspruch 11 oder 12, wobei die Richtlinienregeln unter weiterer Berücksichtigung von mindestens einem aus folgenden Kriterien aufgestellt werden:
- die Netzwerklast in der Zone entsprechend dem Ziel des Anrufs, der Sitzung oder dem Dienst, die von dem Benutzer angefordert werden,
- der Benutzer ist der Letztverbundene in der berücksichtigten Netzwerkzelle (3),
- der Benutzer hat aktuell eine offene Sitzung, aber mindestens eine Meldung über erreichte Verbrauchsgrenzen wurde empfangen,
- der Benutzer abonnierte ein gegebenes Dienstangebot,
- der Benutzer gehört zu einer gegebenen Bewertungsgruppe,
- der Benutzer nutzt einen Dienst mit gegebenem, erforderlichem Medientyp oder Träger,
- der Benutzer zahlt einen anderen Preis,
- der Benutzer benötigt einen spezifischen Dienst.

14. Verfahren nach einem beliebigen der Ansprüche 11 bis 13, mit einem Schritt, bei dem die Richtlinienregeln von einer Durchsetzungsfunktion für Richtlinien und Gebühren (PCEF) (17) unter Nutzung von mindestens einer der folgenden Aktionen angewendet werden:
- zum Bestimmen und/oder Ändern der Gebührenregel oder Gruppe,
- zum Ändern der für einen Benutzer verfügbaren Bandbreite,
- zum Ändern der Dienstgüte,
- zum Beenden der Sitzung,
- zum Umleiten des Benutzers auf einen anderen Dienst,
- zum Beschränken spezifischer Zugänge,
- zum Filtern des Sitzungsverkehrs durch Anwenden eines IP-Paketfilters, um mindestens einen spezifischen Medientyp zu blockieren,
- zum Umleiten der Benutzersitzung auf ein anderes Netzwerk,
- zum Ändern von Sitzungsprioritäten,
- zum Ändern von Sitzungsrichtlinien.

## Revendications

1. Système de gestion de réseau sans fil (2), comprenant :
▪ un système de facturation en ligne (13) d'au moins une zone de réseau d'accès radio sans fil (7, 7a) couvrant au moins une cellule de réseau (3),
▪ une fonction de règles de politique et de facturation (15) configurée pour interroger une valeur d'indicateur de charge de zone représentative de la charge du réseau dans l'au moins une cellule de réseau (3),
dans lequel la fonction de règles de politique et de facturation (15) est configurée pour déterminer des valeurs de seuil de l'indicateur de charge de zone conformément à des données de performance du réseau d'accès radio historiques, et dans lequel la fonction de règles de politique et de facturation (15) est configurée pour établir une attribution de ressources réseau, et des règles de politiques d'évaluation et de facturation d'utilisateur basées sur la détection de valeurs de l'indicateur de charge de zone par rapport à des seuils et au profil et crédit d'utilisateur stockés dans le système de facturation en ligne (13).

2. Système selon la revendication 1, dans lequel la fonction de règles de politique et de facturation (15) est configurée pour établir une attribution de ressources et des règles de politiques d'évaluation et de facturation d'utilisateur en prenant en compte par ailleurs l'indicateur de charge de zone de la zone de réseau (7, 7a) correspondant à la destination d'un appel ou d'un service demandé par l'utilisateur.

3. Système selon la revendication 1 ou 2, comprenant en outre un système de gestion du zonage (11) couplé à au moins un centre d'exploitation et de maintenance (9, 9a) de l'au moins une cellule de réseau (3) et configuré pour collecter des données de performance du réseau et utiliser lesdites données de performance du réseau pour établir un indicateur de charge de zone.

4. Système selon la revendication 2 ou 3, dans lequel les données de performance du réseau comprennent un comptage des sessions actives par cellule (3) dans la zone de réseau considérée (7, 7a).

5. Système selon la revendication 3 ou 4, dans lequel le système de gestion du zonage (11) est configuré pour collecter les données de performance du réseau pour calculer périodiquement l'indicateur de charge de zone.

6. Système selon l'une quelconque des revendications 3 et 4, dans lequel le système de gestion du zonage (11) est configuré pour collecter les données de performance du réseau lorsqu'il reçoit d'une interrogation de valeur d'indicateur de charge de zone.

7. Système selon l'une quelconque des revendications 1 à 6, dans lequel le système de facturation en ligne (13) est configuré pour indiquer à la fonction de règles de politique et de facturation (15) de déterminer de nouvelles règles de politique lorsque des seuils de fluctuation de l'indicateur de charge de zone prédéterminés sont atteints.

8. Système selon l'une quelconque des revendications 1 à 7, dans lequel la fonction de règles de politique et de facturation (15) est configurée pour interroger le système de facturation en ligne (9, 9a) afin de récupérer l'indicateur de charge de zone durant une session au déclenchement d'au moins un déclenchement actif lié à un événement de session.

9. Système selon l'une quelconque des revendications 1 à 8, dans lequel le système de facturation en ligne (13) est configuré pour déterminer, à partir d'un message de déclenchement de réseau, des informations d'emplacement d'abonné pour interroger le système de gestion de réseau (2) correspondant à la cellule (3) où le message de déclenchement est détecté.

10. Système selon l'une quelconque des revendications 1 à 9, dans lequel les paramètres d'évaluation spécifiques sont définis et utilisés pour établir les règles de politique pour une zone de réseau d'accès radio sans fil (7, 7a).

11. Procédé de gestion de ressources d'accès radio du réseau sans fil dans un système de gestion de réseau (2), comprenant
▪ un système de facturation en ligne (13) d'au moins une zone de réseau d'accès radio sans fil (7, 7a) couvrant au moins une cellule de réseau (3),
▪ une fonction de règles de politique et de facturation (15) configurée pour interroger une valeur d'indicateur de charge de zone représentative de la charge du réseau dans l'au moins une cellule de réseau (3),
comprenant les étapes suivantes
- des données de performance du réseau d'au moins un centre d'exploitation et de maintenance (9, 9a) connecté à l'au moins une cellule de réseau (3) sont collectées,
- la fonction de règles de politique et de facturation (15) détermine des valeurs de seuil de l'indicateur de charge de zone conformément à des données de performance du réseau d'accès radio historiques,
- une attribution de ressources réseau et des règles de politiques d'évaluation et de facturation d'utilisateur sont établies par la fonction de règles de politique et de facturation (15) en prenant en compte la valeur d'indicateur de charge de zone par rapport à des seuils et au profil et crédit d'utilisateur stockés dans le système de facturation en ligne (13).

12. Procédé selon la revendication 11, comprenant en outre les étapes suivantes
- un système de gestion du zonage collecte les données de performance du réseau à partir de l'au moins un centre d'exploitation et de maintenance (9, 9a) connecté à l'au moins une cellule de réseau (3),
- le système de gestion du zonage utilise les données collectées pour établir un indicateur de charge de zone de la zone (8) couvrant l'au moins une cellule de réseau (3),
- la fonction de règles de politique et de facturation (15) génère des règles en prenant en compte la valeur d'indicateur de charge de zone.

13. Procédé selon la revendication 11 ou 12, dans lequel les règles de politique sont établies en outre en prenant en compte au moins un des critères suivants
- la charge de réseau dans la zone correspondant à la destination de l'appel, de la session ou du service demandé par l'utilisateur,
- l'utilisateur est le dernier connecté dans une cellule de réseau considérée (3),
- l'utilisateur possède actuellement une session ouverte mais au moins une indication sur des seuils de consommation atteints a été reçue,
- l'utilisateur s'est abonné à une offre de service donnée,
- l'utilisateur appartient à un groupe d'évaluation donné,
- l'utilisateur utilise un service avec un type de médium ou un support requis donné,
- l'utilisateur paye un prix différent,
- l'utilisateur requiert un service spécifique.

14. Procédé selon l'une quelconque des revendications 11 à 13, comprenant une étape dans laquelle les règles de politique sont appliquées par une fonction d'application de politique et de facturation (PCEF) (17) en utilisant au moins une des actions suivantes
- pour déterminer et/ou modifier une règle ou un groupe de facturation,
- pour modifier la bande passante disponible pour un utilisateur,
- pour modifier la qualité de service,
- pour interrompre la session,
- pour rediriger l'utilisateur vers un autre service,
- pour limiter des accès spécifiques,
- pour filtrer le trafic de session en appliquant un filtre de paquets IP afin de bloquer au moins un type de médium spécifique,
- pour rediriger la session d'utilisateur vers un autre réseau,
- pour modifier des priorités de session,
- pour modifier des politiques de session.
